# EUROPÄISCHE PATENTSCHRIFT

(11) **EP 3 779 239 B1**
(45) Veröffentlichungstag und Bekanntmachung des Hinweises auf die Patenterteilung: **11.08.2021**
(21) Anmeldenummer: 19191460.5
(22) Anmeldetag: 13.08.2019
(51) Int. Cl.: F16H 49/00, F01L 1/352

(54) **HOCHUNTERSETZENDES GETRIEBE**
HIGH REDUCTION TRANSMISSION
ENGRENAGE À GRANDE DÉMULTIPLICATION

(43) Veröffentlichungstag der Anmeldung: 17.02.2021
(73) Patentinhaber: maxon international ag, 6072 Sachseln (CH)
(72) Erfinder: von Lehmann, Ernst, 79286 Glottertal (DE); Zimmermann, Astrid, 79350 Sexau (DE)
(74) Vertreter: Grünecker Patent- und Rechtsanwälte PartG mbB

(56) Entgegenhaltungen:
- EP-A2- 0 974 773
- CN-A- 101 328 954
- US-A1- 2003 047 025
- US-B2- 8 656 800

## Beschreibung

Die vorliegende Erfindung betrifft ein Getriebe mit einem Hohlrad, in dem ein flexibles Zahnrad angeordnet ist, wobei das flexible Zahnrad mit einem Wavegenerator in Verbindung steht und der Wavegenerator das flexible Zahnrad verformt, so dass es bereichsweise mit dem Hohlrad in Eingriff steht und wobei das flexible Zahnrad mindestens zwei Zahnsegmente umfasst, die mittels Federsegmenten miteinander verbunden sind, mindestens eines der Zahnsegmente eine Ausnehmung aufweist, jedes der Federsegmente eine Mittelebene aufweist, die eine zentrale Mittelachse des Getriebes beinhaltet und das jeweilige Federsegment in zwei Bereiche gleicher Länge unterteilt und jede Ausnehmung eine Mittelebene aufweist, die die zentrale Mittelachse des Getriebes beinhaltet und die Ausnehmung in zwei gleich große Bereiche unterteilt und die Mittelebene jedes Federsegments einen unterschiedlichen Abstand zu der auf jeder Seite der Mittelebene des Federsegments daneben liegenden Mittelebene der Ausnehmung aufweist.

Derartige Getriebe sind bereits bekannt und werden beispielsweise in der Robotertechnik eingesetzt. Auch die Verwendung im Automobilbereich ist bekannt. So zeigt beispielsweise die WO 2016/165684 A2 ein Verstellgetriebe zum Verstellen zweier Bauteile mit einem Hohlrad, einem Mitnehmerrad, einem Wavegenerator und einem elastischen Stirnrad. Das elastische Stirnrad besteht aus mehreren identisch aufgebauten Zahnelementen. Jedes Zahnelement weist einen dem Hohlrad zugewandten Kopfbereich und einen dem Wavegenerator zugewandten Fußbereich auf. Die Kopfbereiche der Zahnelemente sind mit einer Verzahnung versehen, die mit dem Hohlrad in Kontakt kommen kann. Zudem weist jedes Zahnelement in seinem Kopfsegment eine nach außen offene Ausnehmung auf, die die Verzahnung unterbricht und mit einem Mitnehmerbolzen eines Mitnehmerrads in Kontakt steht. Nebeneinanderliegende Zahnelemente sind mittels elastischer Verbindungselemente miteinander verbunden. Der Wavegenerator ist im Wesentlichen elliptisch und bringt das elastische Stirnrad ebenfalls in eine elliptische Form, so dass zwei einander gegenüberliegende Bereiche des elastischen Stirnrads in Eingriff mit dem Hohlrad sind.

Weiter zeigt die EP 0 974 773 A2 ein Wellgetriebe mit einem starren Stützring mit einer zylindrischen, innenverzahnten Stützfläche, in dem eine radialflexible Abrollbuchse mit einer verzahnten Außenmantelfläche angeordnet ist. In der Abrollbuchse ist eine Antriebswelle angeordnet, die mit einer Antriebseinrichtung verbunden ist. Die Antriebseinrichtung steht über eine Vielzahl von Stößeln mit der radialflexiblen Abrollbuchse in Verbindung und verformt die Außenmantelfläche der Abrollbuchse derart, dass sie an einem oder mehreren Umfangsabschnitten mit der Stützfläche des Stützrings in Eingriff steht. Die Stößel sind mit einem ringförmigen Band einstückig aneinander angeformt, wobei das ringförmige Band mindestens annähernd auf halber Länge der einzelnen Stößel angeformt ist. Jeder Stößel weist federnde Arme auf, die in einem Kopfbereich oder in einem radial inneren Bereich, also einem Fußbereich, der Stößel ausgebildet sind.

Ausgehend von diesem Stand der Technik soll nun ein oben beschriebenes Getriebe weiter verbessert werden, sodass insbesondere auch bei kleineren Durchmessern der Getriebe eine ausreichende elastische Verformung des flexiblen Zahnrads realisiert werden kann und ein sehr kurzes Getriebe mit hoher Torsionssteifigkeit bereitgestellt wird.

Hierzu ist erfindungsgemäß vorgesehen, dass in der Ausnehmung des mindestens einen Zahnsegments ein Zapfenelement angeordnet ist.

Ein derartiges Zahnrad kann sehr kurz gebaut werden und weist dennoch die erwünschte hohe Torsionssteifigkeit auf. Zudem eröffnet der erfindungsgemäße Aufbau des Getriebes die Möglichkeit, die Flexibilität des flexiblen Zahnrads zu erhöhen, so dass insbesondere bei kleinen Durchmessern des Getriebes noch ausreichende elastische Verformungen des Zahnrads realisiert werden können.

Es kann vorgesehen sein, dass mindestens eines der Zahnsegmente in radialer Richtung des flexiblen Zahnrads eine Taillierung aufweist und die Federsegmente im Bereich der Taillierung an dieses Zahnsegment angreifen. Dadurch können die Federsegmente größer bzw. länger gestaltet werden, wodurch die Flexibilität des Zahnrads nochmals gesteigert wird, was insbesondere bei kleinen Getriebedurchmessern vorteilhaft ist.

Dabei sollten die Federelemente vorteilhafterweise als bogenförmige Stege ausgebildet sein, die sich auf einer Kreislinie in Umfangsrichtung des flexiblen Zahnrads erstrecken, so dass sie Elastizität in radialer Richtung aufweisen und in Tangentialrichtung steif sind. Somit wird eine Verformung des flexiblen Zahnrads nur in radialer Richtung zugelassen. In Tangentialrichtung können Kräfte ohne eine Verformung des flexiblen Zahnrads in tangentialer Richtung von einem Zahnsegment auf das benachbarte Zahnsegment übertragen werden. Dadurch wird ein Getriebespiel zwischen Getriebeeingang und -ausgang möglichst klein gehalten.

Eine besonders einfache Ausgestaltung des flexiblen Zahnrads kann dadurch ermöglicht werden, dass die Federsegmente einstückig mit den Zahnsegmenten ausgebildet sind. Vorteilhafterweise sind die Federsegmente als Stege ausgebildet, die benachbarte Zahnsegmente miteinander verbinden. Diese Stege sind bevorzugt bogenförmig ausgebildet und gewährleisten die erwünschte Elastizität in radialer Richtung, wohingegen sie in Tangentialrichtung steif sind. Die Stege sind vorzugsweise mit Abstand zum Kopfbereich der Zahnsegmente, an denen diese in Eingriff mit dem Hohlrad kommen, und mit Abstand zu den Fußbereichen, an denen die Zahnsegmente in Kontakt mit dem Wavegenerator kommen, angeordnet. Die bogenförmigen Stege erstrecken sich bevorzugt entlang einer Kreislinie, deren Mittelpunkt im Bereich oder auf der zentralen Mittelachse des Getriebes liegt. Geradlinig ausgeführte Stege sind alternativ auch möglich.

Um die Flexibilität weiter zu steigern, kann vorgesehen sein, dass das flexible Zahnrad mindestens ein erstes Zahnsegment aufweist, das mit einer Aussparung versehen ist, und mindestens ein zweites Zahnsegment, dass keine Ausnehmung aufweist. Vorzugsweise weisen die mit einer Taillierung versehenen Zahnsegmente keine Ausnehmung auf. Dadurch können die sich zwischen den Zahnsegmenten erstreckenden Federsegmente länger gestaltet werden, und es wird eine gute Kombination aus Flexibilität und Festigkeit der Zahnsegmente erreicht. Die Verzahnungskraft des mindestens einen zweiten Zahnsegments wird über die Federsegmente auf das mindestens eine erste Zahnsegment übertragen.

In noch einer weiteren Ausführungsform greifen die Federsegmente auf Höhe der Ausnehmungen in dem mindestens einen ersten Zahnsegment an das mindestens eine erste Zahnsegment an. Dadurch erfolgt eine gute Übertragung der Verzahnungskräfte des mindestens einen zweiten Zahnsegments auf das mindestens eine erste Zahnsegment.

Um eine ausreichende Flexibilität auch bei den mit einer Ausnehmung versehenen Zahnsegmenten zu erreichen, die im Mittelbereich deutlich breiter sind als die mit der Taillierung versehenen Zahnsegmente, kann vorgesehen werden, dass die Federsegmente in dem Bereich, in dem sie mit dem mindestens einen ersten Zahnsegment in Kontakt stehen, einen Freistich aufweisen.

Ferner kann vorgesehen sein, dass eine Mehrzahl von Zahnsegmenten, insbesondere mindestens vier Zahnsegmente vorgesehen sind. Bei einem flexiblen Zahnrad mit vier oder mehr Zahnsegmenten, die dementsprechend mit vier oder mehr Federsegmenten miteinander verbunden sind, kann eine ausreichende Flexibilität des Zahnrads einfach gewährleistet werden.

Ein guter Kompromiss zwischen Flexibilität des flexiblen Zahnrads und ausreichender Festigkeit kann dadurch ermöglicht werden, dass die Hälfte der Zahnsegmente eine Ausnehmung aufweisen. Es sind also gleich viel erste und zweite Zahnsegmente vorhanden. Die zweiten Zahnsegmente, die keine Ausnehmung aufweisen, übertragen die Verzahnungskräfte über die Federsegmente auf die Zahnsegmente mit einer Ausnehmung. Dadurch können die flexiblen Verbindungen größer gestaltet werden, wodurch die Flexibilität des flexiblen Zahnrads gesteigert wird und man auch bei kleinem Durchmesser des Getriebes noch ausreichende elastische Verformungen sicherstellen kann.

In noch einer weiteren Ausführungsform kann vorgesehen sein, dass die Ausnehmung in den ersten Zahnsegmenten im Inneren des jeweiligen Zahnsegments angeordnet ist. Die Ausnehmung in diesen Zahnsegmenten weist daher eine geschlossene Umfangskontur auf, an der das Zapfenelement abrollt. Dadurch ist der Kontakt zwischen dem Zapfenelement und der Ausnehmung in den entsprechenden Zahnsegmenten nie unterbrochen, wodurch die Laufruhe des Getriebes gesteigert wird. Die Ausnehmungen sind vorteilhafterweise im Wesentlichen elliptisch ausgeführt. Ferner können die Zahnsegmente dann in einem dem Hohlrad zugewandten Kopfbereich eine durchgehende Verzahnung aufweisen.

Gemäß noch einer weiteren Ausführungsform kann sich jedes der Zahnsegmente in zwei Auflagepunkten auf dem Wavegenerator abstützen. Ein dem Wavegenerator zugewandter Fußbereich ist dann konkav ausgebildet, sodass er nur an zwei Punkten mit dem Wavegenerator in Kontakt kommt. Der Winkel zwischen den beiden Auflagepunkten beträgt vorzugsweise etwa 170°. Die Ausrichtung der Zahnsegmente normal zur Außenkontur des Wavegenerators kann dadurch verbessert werden.

In noch einer weiteren Ausführungsform ist vorgesehen, dass der Wavegenerator mindestens einen Nocken aufweist, der mit dem flexiblen Zahnrad in Kontakt steht und der Nocken derart ausgebildet ist, dass die Zahnsegmente in dem Bereich, in dem sie mit dem Hohlrad in Eingriff stehen, derart verformt werden, dass sie einen Abschnitt eines imaginären Zahnrades mit einem konstanten Radius bilden, das sich um eine Achse dreht, die in einem festgelegten Abstand zur zentralen Mittelachse des Getriebes angeordnet ist. Der Abschnitt des imaginären Zahnrads mit einem konstanten Radius umfasst einen Winkelbereich von vorzugsweise 45°-100° bzw. 55°-85° und insbesondere 60°-80°. Der konstante Radius des imaginären Zahnrads weist ein Längenverhältnis zum Radius des Hohlrads von vorzugsweise 75-99%, bzw. 82-97% und insbesondere 85-95% auf. Dadurch kann die Anzahl der Zahnsegmente unabhängig von der Zähnezahl des gesamten flexiblen Zahnrads sein. Die Zähnezahl des Zahnrades ist also kein ganzzahliges Vielfaches der Anzahl der Zahnsegmente. Dadurch muss die Anordnung der Zähne auf den Zahnsegmenten nicht zwingend einheitlich sein. Durch die oben beschriebene Ausgestaltung des Wavegenerators wird sichergestellt, dass jeder Zahn auf den Zahnsegmenten die gleiche Form hat. Die einzige Randbedingung dabei ist, dass der Abstand der beiden äußeren Zähne, welche auf benachbarten Zahnsegmenten liegen, innerhalb dieses Bereichs ein ganzzahliges Vielfaches der Zahnweite S ist. Mit Zahnweite S ist dabei der doppelte Abstand zwischen zwei benachbarten Zähnen gemeint. Vorzugsweise weist der Wavegenerator zwei entsprechende Nocken auf, die derart am Umfang des Wavegenerators angeordnet sind, dass der Wavegenerator in dem Bereich, in dem das flexible Zahnrad mit dem Hohlrad in Kontakt kommt, einen Abschnitt mit konstantem Radius aufweist. Der Abschnitt mit konstantem Radius umfasst einen Winkelbereich von vorzugsweise 45°-100°, bzw. 55°-85° und insbesondere 60°-80°. Alternativ kann der Wavegenerator in dem Bereich, in dem das flexible Zahnrad mit dem Hohlrad in Kontakt kommt, auch einen elliptischen Abschnittsverlauf aufweisen. Bei den erwähnten Ausführungen können die Zähne des flexiblen Zahnrads vorzugsweise entsprechend angepasst sein und können zumindest zwei unterschiedliche Zahnformen aufweisen. Es sind auch Ausführungen des Wavegenerators mit beispielsweise drei, vier oder mehr Nocken möglich. Die Nocken sind dabei vorzugsweise symmetrisch um den Umfang des Wavegenerators angeordnet.

In einer einfachen Ausgestaltung kann vorgesehen sein, dass die Zapfenelemente als Bolzen ausgebildet sind, die mit einer Abtriebswelle verbunden sind. Dadurch wird die Bewegung des flexiblen Zahnrads über die Bolzen auf eine gleichförmige Drehbewegung des Abtriebs übertragen.

Vorzugsweise ist dabei auf jedem Bolzen eine Hülse angeordnet, sodass ein Gleitlager mit den damit verbundenen Vorteilen ausgebildet wird. Alternativ können auf jedem Bolzen auch eine elastische Hülse oder elastische O-Ringe angeordnet sein. Bei dieser Ausführungsvariante können die zugehörigen Ausnehmungen alternativ mit einem runden Querschnitt ausgeführt werden.

In einer alternativen Ausführung sind die Zapfenelemente feststehend und das Hohlrad drehbar ausgeführt. Hierbei wird das Hohlrad durch den Eingriff des flexiblen Zahnrads angetrieben und dient dementsprechend in dieser Ausführungsvariante als Abtriebselement.

Im Folgenden wird die Erfindung anhand von Figuren näher beschrieben. Es zeigen:
Fig. 1: perspektivische Darstellung eines erfindungsgemäßen Getriebes,
Fig. 2: Vorderansicht des Getriebes aus Fig. 1,
Fig. 3: Querschnitt durch das Getriebe aus Fig. 2 entlang der Linie III-III,
Fig. 4: flexibles Zahnrad aus dem Getriebe aus Fig. 1,
Fig. 5: Detail des flexiblen Zahnrads aus Fig. 4,
Fig. 6: Darstellung des Eingriffsbereichs zwischen dem flexiblen Zahnrad und dem Hohlrad des Getriebes aus Fig. 1,
Fig. 7: vereinfachte Darstellung des in Fig. 6 gezeigten Eingriffsbereichs zwischen dem flexiblen Zahnrad und dem Hohlrad, und
Fig. 8: vergrößerte Darstellung des Eingriffsbereichs zwischen dem flexiblen Zahnrad und dem Hohlrad.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorhergehende oder nachfolgende Figurenbeschreibungen Bezug genommen.

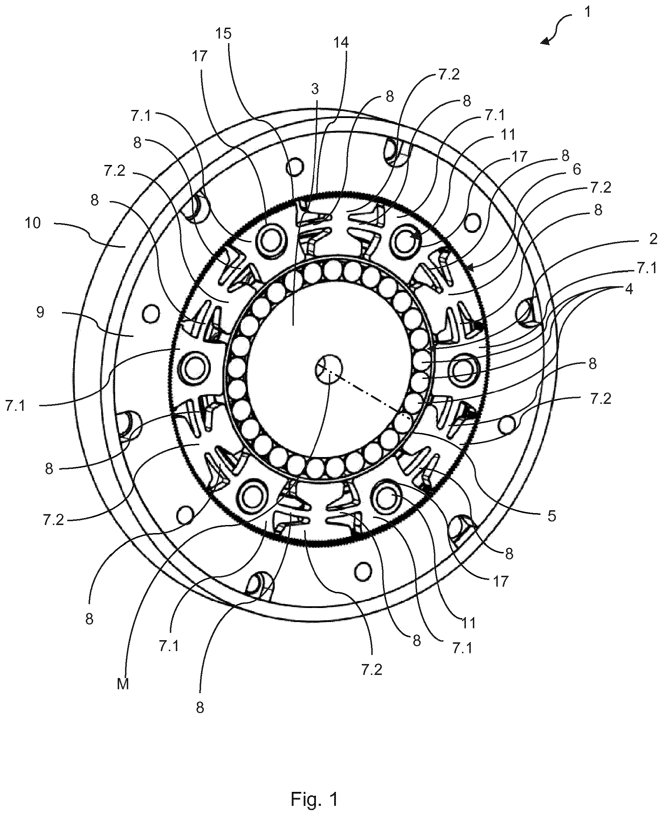

In Fig. 1 ist ein Ausführungsbeispiel eines Getriebes 1 der vorliegenden Erfindung gezeigt. Das Getriebe 1 umfasst ein Gehäuse 10, in dem ein Wavegenerator 2, ein flexibles Zahnrad 6, ein feststehendes Hohlrad 9 und ein Zapfenelement 11 angeordnet sind. Der Deckel des Gehäuses 10 ist abgenommen, um einen Einblick in das Innere des Getriebes zu gewähren. Das Getriebe 1 ist im Wesentlichen scheibenförmig mit einer zentralen Mittelachse M.

Der Wavegenerator 2 umfasst einen Grundkörper 3, welcher näherungsweise einen elliptischen Querschnitt aufweist. Durch den näherungsweise elliptischen Querschnitt weist der Grundkörper 3 zwei Abschnitte mit Erhebungen auf. Die Erhebungen am Grundkörper 3 erzeugen Nocken an dem Wavegenerator 2. Durch die Nocken wird das flexible Zahnrad 6 mit dem Hohlrad 9 in Kontakt gebracht. Dabei kann der Grundkörper 3 einen Abschnitt mit konstantem Radius aufweisen, wobei der Mittelpunkt Ms dieses konstanten Radius um den Abstand e vom der zentralen Mittelachse M versetzt ist. Auf dem Grundkörper 3 sind Wälzkörper 4 angeordnet, die von einer verformbaren Hülse 5 umgeben sind. Auf dem Wavegenerator 2 ist das flexible Zahnrad 6 angeordnet. Das flexible Zahnrad 6 ist daher über die verformbare Hülse 5 und die Wälzkörper 4 mit dem Grundkörper 3 in Kontakt.

Das flexible Zahnrad 6 umfasst mehrere Zahnsegmente 7.1, 7.2, die mittels flexibler Federsegmente 8 miteinander verbunden sind. Das flexible Zahnrad 6 ist mit einer Außenverzahnung 14 versehen, die mit einer Innenverzahnung 15 des feststehenden Hohlrads 9 in Eingriff bringbar ist. Im dargestellten Ausführungsbeispiel umfasst das flexible Zahnrad 6 zwölf Zahnsegmenten 7.1, 7.2, die in sechs erste Zahnsegmente 7.1 und sechs zweite Zahnsegmente 7.2 unterteilt sind. Die ersten Zahnsegmente 7.1 weisen je eine Ausnehmung 17 auf, die im Inneren des jeweiligen ersten Zahnsegments 7.1 als durchgehende Öffnung ausgebildet ist. In jeder Ausnehmung 17 ist jeweils ein Bolzen 12 des Zapfenelements 11 aufgenommen. Jeder Bolzen 12 ist von einer Hülse 13 umgeben, sodass ein Gleitlager ausgebildet wird. Die elliptische Form des Grundkörpers 3 des Wavegenerator 2 wird über die Wälzkörper 4 und die verformbare Hülse 5 auf das flexible Zahnrad 6 übertragen. Dadurch steht die Außenverzahnung 14 des flexiblen Zahnrads 6 an zwei einander gegenüberliegenden Punkten mit der Innenverzahnung 15 des Hohlrads 9 in Eingriff.

Der Wavegenerator 2 ist vorzugsweise mit einer Antriebswelle verbunden. Eine Drehung der Antriebswelle führt dazu, dass sich der Wavegenerator 2 dreht. Diese Drehbewegung wird auf das flexible Zahnrad 6 übertragen. Die Außenverzahnung 14 des flexiblen Zahnrads 6 läuft daher an der Innenverzahnung 15 des Hohlrads 9 ab. Die zwischen den Zahnsegmenten 7.1, 7.2 angeordneten Federsegmente 8 ermöglichen die flexible bzw. elastische Verformung des flexiblen Zahnrads 6. Die Bewegung des flexiblen Zahnrads 6 wird über die Bolzen 12 auf eine gleichförmige Drehbewegung des Abtriebs übertragen.

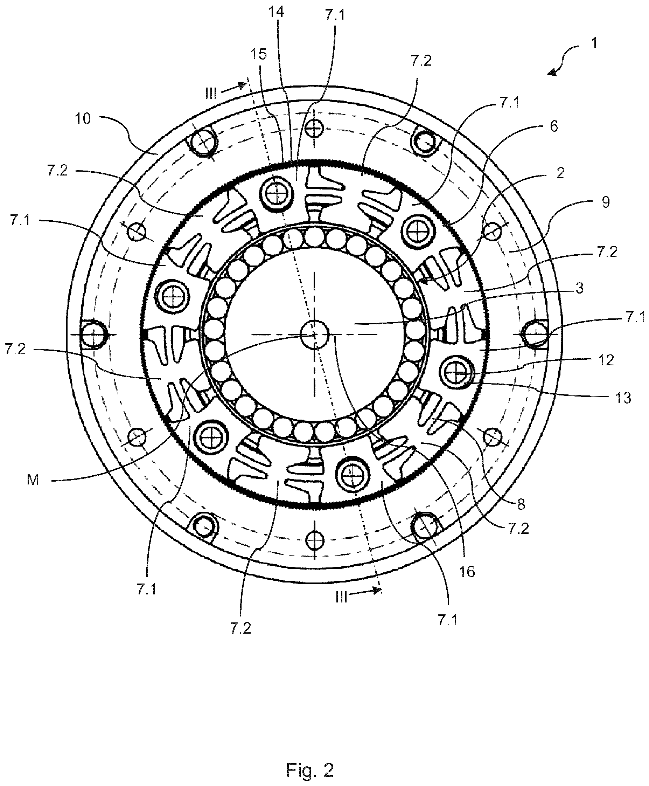

In Fig. 2 ist das Getriebe 1 aus Fig. 1 in einer Vorderansicht dargestellt. Hier ist die elliptische Querschnittsform des Wavegenerators 2, bzw. des Grundkörpers 3 des Wavegenerator 2, gut zu erkennen. Der Mittelpunkt der Ellipse liegt immer auf der zentralen Mittelachse M des Getriebes 1. Im dargestellten Fall ist die Hauptachse 16 des elliptischen Grundkörpers 3 genau horizontal ausgerichtet. Durch die elliptische Form des Wavegenerators 2 wird das flexible Zahnrads 6 in zwei Bereichen, im in Fig. 2 dargestellten Fall jeweils auf der rechten und der linken Seite des Getriebes 1, derart verformt, dass die Außenverzahnung 14 des flexiblen Zahnrads 6 in Eingriff mit der Innenverzahnung 15 des feststehenden Hohlrads 9 kommt. Ferner ist in den anderen beiden Bereichen, welche in der Figur 2 auf der oberen und unteren Seite dargestellt sind, die Außenverzahnung 14 des flexiblen Zahnrads 6 nicht in Eingriff mit der Innenverzahnung 15 des Hohlrads 9.

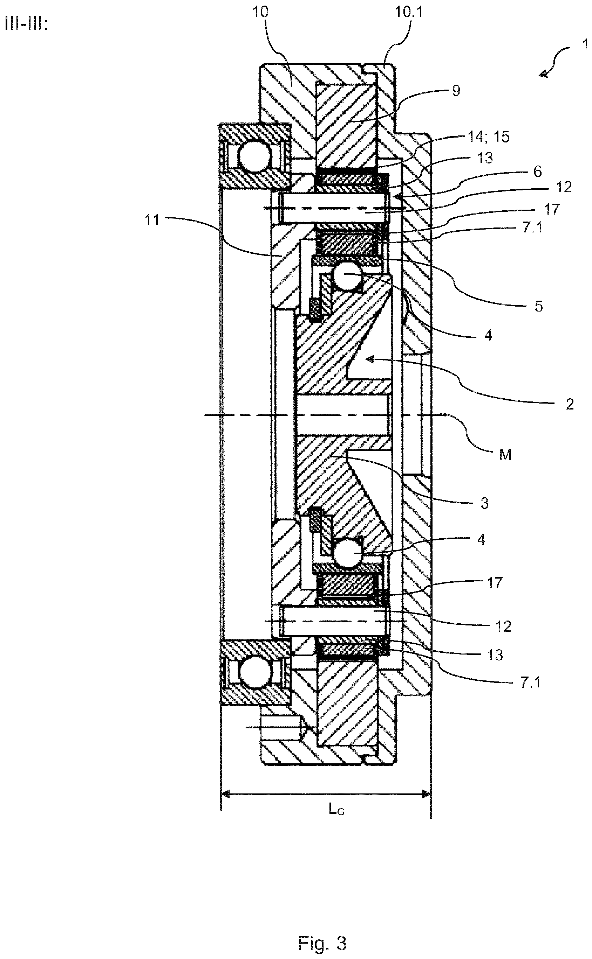

Fig. 3 zeigt einen Querschnitt durch das Getriebe 1 entlang der Linie III-III aus Fig. 2. Das Getriebe 1 umfasst das Gehäuse 10, das von einem Gehäusedeckel 10.1 verschlossen ist. In dem Gehäuse 10 ist das Hohlrad 9 befestigt. Das Hohlrad 9 steht bereichsweise mit dem flexiblen Zahnrad 6 in Eingriff, wozu das Hohlrad 9 die Innenverzahnung 15 und das flexible Zahnrad 6 die Außenverzahnung 14 aufweist. Das flexible Zahnrad 6 umfasst die ersten Zahnsegmente 7.1. Jedes der ersten Zahnsegmente 7.1 umfasst eine Ausnehmung 17. In jeder Ausnehmung 17 ist einer der Bolzen 12 angeordnet. Auf jedem der Bolzen 12 kann eine der Hülsen 13 angebracht sein, sodass ein Gleitlager ausgebildet wird. Die Ausnehmungen 17 sind etwas größer als die Hülsen 13. Im dargestellten Fall weisen die Ausnehmungen 17 einen elliptischen Querschnitt auf. Der Querschnitt der Bolzen 12 und der Hülsen 13 ist rund. Der Durchmesser der Ausnehmungen 17 ist etwas größer als der Außendurchmesser der Hülsen 13. Das flexible Zahnrad 6 sitzt auf der verformbaren Hülse 5 auf. Die verformbare Hülse 5 steht über die Wälzkörper 4 mit dem Grundkörper 3 in Verbindung. Der Grundkörper 3, die Wälzkörper 4 und die verformbare Hülse 5 bilden den Wavegenerator 2 aus. Wie in Fig. 3 deutlich zu sehen, weist das Getriebe 1 eine sehr kurze Gesamtlänge L_{G} auf und ist somit sehr kurz im Verhältnis zum Durchmesser. Dennoch ist eine hohe Torsionssteifigkeit gegeben. Ein wie oben beschriebenes Getriebe weist eine hohe Untersetzung auf.

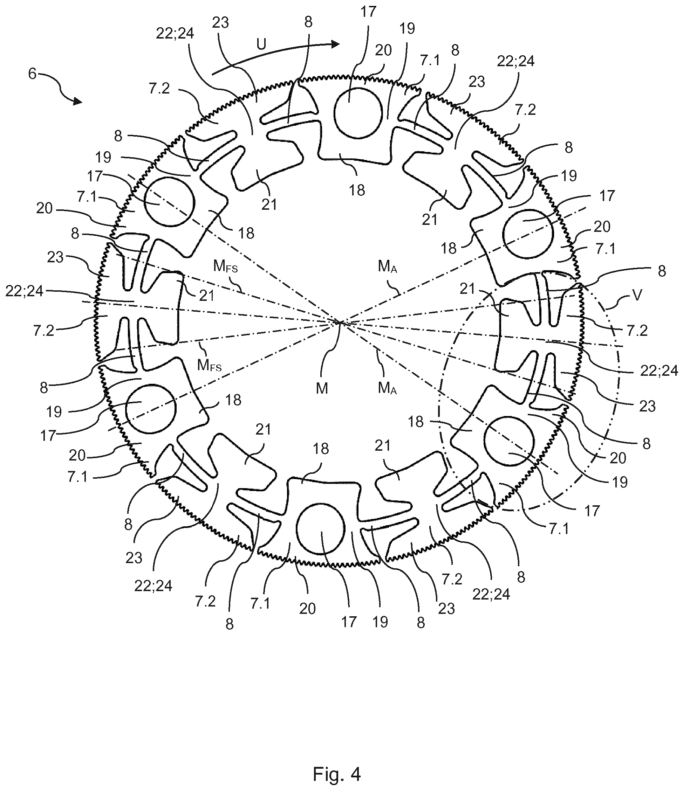

In Fig. 4 ist ein Ausführungsbeispiel des flexiblen Zahnrads 6 dargestellt. Wie bereits beschrieben, umfasst das flexible Zahnrad 6 erste und zweite Zahnsegmente 7.1, 7.2, die über Federsegmente 8 miteinander verbunden sind. Im dargestellten Ausführungsbeispiel umfasst das flexible Zahnrad 6 zwölf Zahnsegmente 7.1, 7.2. Jedes zweite der Zahnsegmente, also die ersten Zahnsegmente 7.1, weisen die Ausnehmung 17 auf. Die ersten Zahnsegmente 7.1 sind alle identisch zueinander ausgestaltet. Zwischen den ersten Zahnsegmenten 7.1 sind die zweiten Zahnsegmenten 7.2 angeordnet. Die zweiten Zahnsegmente 7.2 weisen keine Ausnehmung auf. Benachbarte Zahnsegmente 7.1, 7.2 sind über die Federsegmente 8 miteinander verbunden. Die Federsegmente 8 sind als bogenförmige Stege ausgebildet, die sich entlang einer Kreislinie erstrecken, deren Mittelpunkt in dieser Ausführung auf der zentralen Mittelachse des Getriebes 1 liegt.

Im Folgenden wird die Form der ersten Zahnsegmente 7.1 und der zweiten Zahnsegmente 7.2 genauer beschrieben:
Jedes erste Zahnsegment 7.1 weist einen Fußbereich 18 auf, mit dem es mit dem Wavegenerator 2 in Kontakt kommt. Ausgehend von dem Fußbereich 18 radial nach außen schließt sich ein Rumpfbereich 19 an, in dem die Ausnehmung 17 angeordnet ist. Die Ausnehmung 17 weist also eine im Inneren des Zahnsegments 7.1 liegende, geschlossene Kontur auf. Auf dieser Kontur rollt der Bolzen 12 bzw. die Hülse 13 ab. Dadurch ist der Kontakt der Bolzen 12 bzw. der Hülse 13 zur Ausnehmung 17 nie unterbrochen, wodurch die Laufruhe des Getriebes 1 gesteigert wird. An diesen Rumpfbereich 19 schließt sich in radialer Richtung ein Kopfbereich 20 an. An der nach außen weisenden Umfangsfläche des Kopfbereichs 20 jedes ersten Zahnsegments 7.1 ist die Außenverzahnung 14 ausgebildet. Da die Ausnehmung 17 im Inneren des ersten Zahnsegment 7.1 angeordnet ist, erstreckt sich die Außenverzahnung 14 über die gesamte nach außen weisende Umfangsfläche des ersten Zahnsegments 7.1. Wird nun die Breite des ersten Zahnsegments 7.1 in Umfangsrichtung U des flexiblen Zahnrads 6 betrachtet, so weist das erste Zahnsegment 7.1 im Fußbereich 18 eine erste Breite auf, die sich im Rumpfbereich verjüngt und nach außen hin wieder zunimmt, sodass das erste Zahnsegment 7.1 am äußeren Umfang die größte Breite aufweisen.

Auch die zweiten Zahnsegmente 7.2 weisen einen Fußbereich 21 auf, der mit dem Wavegenerator 2 in Kontakt kommt. An diesen Fußbereich 21 schließt sich auch bei den zweiten Zahnsegmenten 7.2 in radialer Richtung nach außen ein Rumpfbereich 22 an, der in einen Kopfbereich 23 übergeht. Die zweiten Zahnsegmente 7.2 weisen keine Ausnehmung auf. Stattdessen sind die zweiten Zahnsegmente 7.2 im Rumpfbereich 22 stark eingeschnürt und weisen also eine Taillierung 24 auf. Auch an der nach außen weisenden Umfangsfläche der Kopfbereiche 23 der zweiten Zahnsegmente 7.2 ist die Außenverzahnung 14 ausgebildet.

Jedes der Zahnsegmente 7.1, 7.2 ist über Federsegmente 8 mit den danebenliegenden Zahnsegmenten 7.2, 7.1 verbunden. Die Federsegmente 8 sind als bogenförmige Stege ausgebildet, die sich auf einer Kreislinie in Umfangsrichtung des flexiblen Zahnrads 6 erstrecken. Die Federsegmente 8 greifen etwa in Höhe der Mitte der Ausnehmung 17 an die ersten Zahnsegmente 7.1 an. Die Verbindung zwischen den Federsegmenten 8 und den zweiten Zahnsegmenten 7.2 ist auf Höhe der Taillierung 24. Wie in Fig. 4 deutlich zu erkennen ist, ist das flexible Zahnrad 6 einstückig ausgebildet.

Die zweiten Zahnsegmente 7.2, die keine Ausnehmung aufweisen, übertragen die Verzahnungskräfte über die Federelemente 8 auf die ersten Zahnsegmente 7.1 mit der Ausnehmung 17. Dadurch können die Federsegmente 8 größer gestaltet werden, wodurch die Flexibilität gesteigert wird und man bei kleinerem Durchmesser des Getriebe 1 noch eine ausreichende elastische Verformung realisieren kann. Durch die dargestellte Form der Federelemente 8 ist sichergestellt, dass sie, soweit möglich, keine Elastizität in tangentialer Richtung aufweisen, sondern nur in radialer Richtung.

Jedes der Federsegmente 8 weist eine Mittelebene M_{FS} auf, die die zentrale Mittelachse des Getriebes 1 beinhaltet und das jeweilige Federsegment 8 in zwei Bereiche gleicher Länge unterteilt. Da die Federsegmente 8 durch kreisbogenförmige Stege ausgebildet sind, entspricht diese Länge einer Bogenlänge. Auch jede der Ausnehmungen 17 weist eine Mittelebene M_{A} auf, die die zentrale Mittelachse des Getriebes 1 beinhaltet und die jeweilige Ausnehmung 17 in zwei gleich große Bereiche unterteilt. Die Federsegmente 8 zwischen den Zahnsegmenten 7.1, 7.2 sind asymmetrisch ausgebildet, in der Art, dass die Mittelebene M_{FS} jedes Federsegments 8 einen unterschiedlichen Abstand zu den beiden jeweils danebenliegenden Mittelebenen M_{A} der Ausnehmungen 17 aufweist. Die Mittelebene M_{FS} jedes Federsegments 8 und die Mittelebene M_{A} jeder Ausnehmung 17 schneiden sich in der zentralen Mittelachse M des Getriebes 1. Der Abstand der Mittelebene M_{FS} jedes Federsegments zu den beiden jeweils danebenliegenden Mittelebenen M_{A} lässt sich also durch Winkel ausdrücken, die unterschiedlich groß sind.

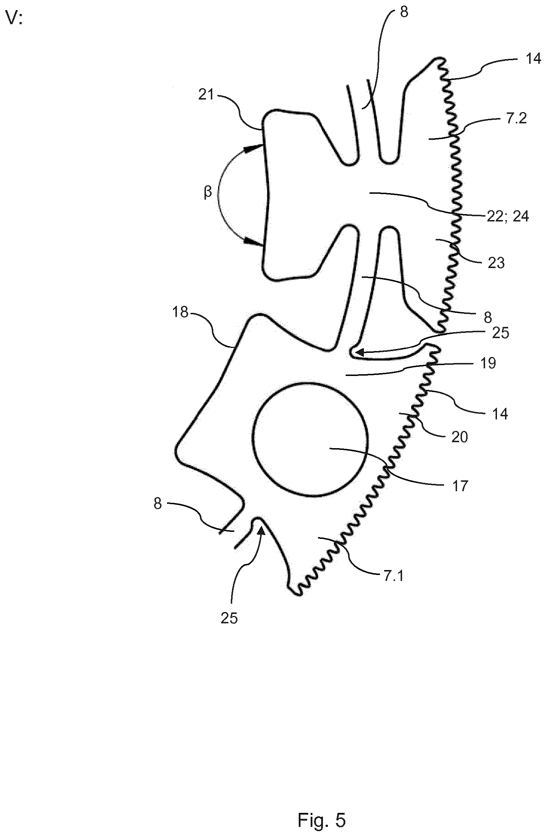

In Fig. 5 ist das Detail V aus Fig. 4 vergrößert dargestellt. Es sind ein erstes Zahnsegment 7.1 und ein zweites Zahnsegment 7.2 dargestellt. Wie bereits beschrieben, weist das erste Zahnsegment 7.1 einen Fußbereich 18, einen Rumpfbereich 19 und einen Kopfbereich 20 auf. Die Ausnehmung 17 liegt im Rumpfbereich 19 des ersten Zahnsegments 7.1. Im Kopfbereich 20 ist die Außenverzahnung 14 ausgebildet. Auch das zweite Zahnsegment 7.2 weist einen Fußbereich 21, einen Rumpfbereich 22, der eine Taillierung 24 aufweist und einen Kopfbereich 23 auf. An der äußeren Umfangsfläche des Kopfbereichs 23 ist die Außenverzahnung 14 ausgebildet. Sowohl der Fußbereich 21 der zweiten Zahnsegmente 7.2 als auch der Fußbereich 18 der ersten Zahnsegmente 7.1 weisen eine konkave Vertiefung aus, sodass sich jedes der Zahnsegmente 7.1, 7.2 mit zwei Auflagepunkten an dem Wavegenerator 2 abstützt. Dadurch wird die Ausrichtung der Zahnsegmente 7.1, 7.2 normal zur Außenkontur des Wavegenerators 2 verbessert. Diese konkave Vertiefung weist einen Öffnungswinkel β von etwa 170° auf.

Die Federsegmente 8 greifen etwa in Höhe der Ausnehmungen 17 an die ersten Zahnsegmente 7.1 an. In dem Bereich, an dem die Federsegmente 8 in die ersten Zahnsegmente 7.1 übergehen, weisen die Federsegmente 8 einen Freistich 25 auf. Durch diesen Freistich 25 kann die Flexibilität des flexiblen Zahnrads 6 im Übergangsbereich von den Federsegmenten 8 in die ersten Zahnsegmente 7.1 erhöht werden.

An die zweiten Zahnsegmente 7.2 greifen die Federsegmente 8 auf Höhe der Taillierung 24 an. Da die zweiten Zahnsegmente 7.2 in diesem Bereich eine sehr geringe Breite aufweisen, ist dort ausreichende Flexibilität gegeben. Die nebeneinanderliegenden Zahnsegmente 7.1, 7.2 sind sowohl im Kopfbereich als auch im Fußbereich beabstandet zueinander.

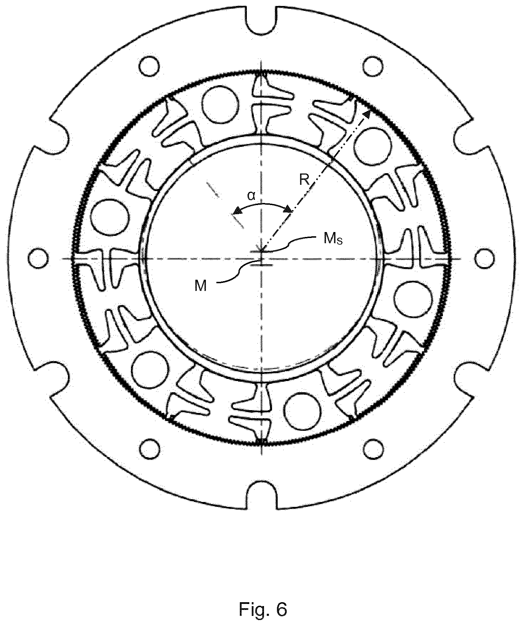

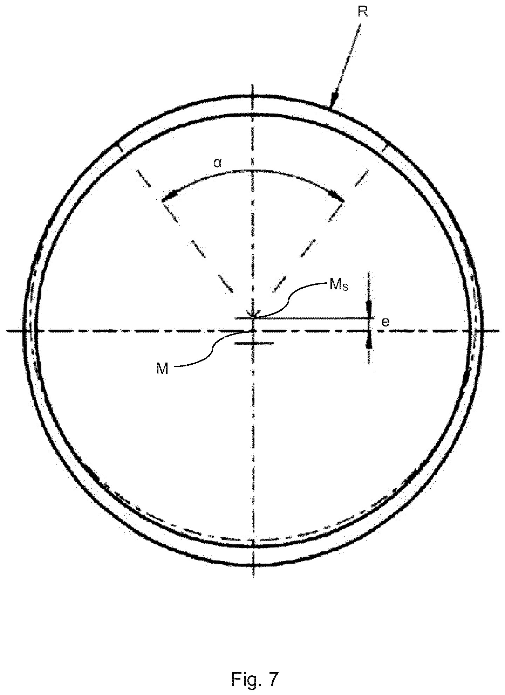

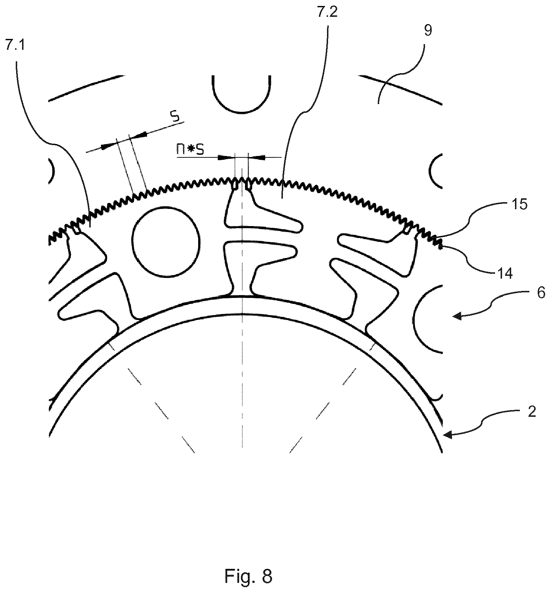

Wie in Fig. 5 zu erkennen, können die ersten Zahnsegmente 7.1 eine andere Zähnezahl aufweisen als die zweiten Zahnsegmente 7.2. Die Zähnezahl des flexiblen Zahnrads 6 ist daher kein ganzzahliges Vielfaches der Anzahl der Zahnsegmente 7.1, 7.2. Die Anzahl der Zahnsegmente 7.1, 7.2 ist also nicht festgelegt durch die Zähnezahl des gesamten flexiblen Zahnrads 6. Somit ist die Anzahl und/oder die Anordnung der Zähne auf den Zahnsegmenten 7.1, 7.2 nicht zwingend einheitlich. Damit jeder Zahn auf den Zahnsegmenten 7.1, 7.2 die gleiche Form hat, kann die Geometrie des Wavegenerators 2, also die elliptische Querschnittsform mit zwei einander gegenüberliegenden Nocken, so gewählt sein, dass sich im Bereich des oberen Hochpunkts (Erhebung) ein konstanter Radius R über einen Winkel α erstreckt, innerhalb dem der Zahneingriff erfolgt. Der Winkel α beträgt in diesem Ausführungsbeispiel 72°. Dies ist in Fig. 6 bis 8 dargestellt. Dadurch ergeben alle sich innerhalb dieses Abschnitts, d.h. des Winkels a, befindenden Zahnsegmente 7.1, 7.2 ein imaginäres Zahnrad mit dem Radius R, welches sich um eine Achse Mₛ dreht. Diese Achse Mₛ weist einen bestimmten Abstand e zur zentralen Mittelachse M des Getriebes 1 auf. Der Abstand e weist hier ein Längenverhältnis von kleiner 10% zum Radius des Hohlrads auf. Die einzige Randbedingung ist, dass der Abstand der beiden äußeren Zähne, die auf benachbarten Getriebeelementen 7.1, 7.2 liegen, innerhalb dieses Bereichs ein ganzzahliges Vielfaches der Zahnweite S ist. Die Zahnweite S ist hier definiert als der doppelte Abstand zwischen zwei nebeneinanderliegenden Zähnen der Außenverzahnung 14. Dies ist in Fig. 8 dargestellt.

Der Vorteil des erfindungsgemäßen Getriebes mit hoher Untersetzung liegt darin, dass die Länge des Getriebes sehr kurz und die Torsionssteifigkeit hoch ist.

### Bezugszeichenliste

- 1: Getriebe
- 2: Wavegenerator
- 3: Grundkörper
- 4: Wälzkörper
- 5: verformbaren Hülse
- 6: flexibles Zahnrad
- 7.1: erstes Zahnsegment
- 7.2: zweites Zahnsegment
- 8: Federsegmente
- 9: Hohlrad
- 10: Gehäuse
- 10.1: Gehäusedeckel
- 11: Zapfenelement
- 12: Bolzen
- 13: Hülse
- 14: Außenverzahnung
- 15: Innenverzahnung
- 16: Hauptachse Grundkörper
- 17: Ausnehmung
- 18: Fußbereich erstes Zahnsegment
- 19: Rumpfbereich erstes Zahnsegment
- 20: Kopfbereich erstes Zahnsegment
- 21: Fußbereich zweites Zahnsegment
- 22: Rumpfbereich zweites Zahnsegment
- 23: Kopfbereich zweites Zahnsegment
- 24: Taillierung
- 25: Freistich

- M: zentrale Mittelachse Getriebe
- L_{G}: Gesamtlänge Getriebe
- U: Umfangsrichtung
- M_{FS}: Mittelebene Federsegment
- M_{A}: Mittelebene Ausnehmung
- M_{S}: Achse imaginäres Zahnrad
- R: Radius imaginäres Zahnrad
- e: Abstand imaginäres Zahnrad
- α: Winkel
- β: Öffnungswinkel
- S: Zahnweite

## Patentansprüche

1. Getriebe (1) mit einem Hohlrad (9), in dem ein flexibles Zahnrad (6) angeordnet ist, wobei das flexible Zahnrad (6) mit einem Wavegenerator (2) in Verbindung steht und der Wavegenerator (2) das flexible Zahnrad (6) verformt, so dass es bereichsweise mit dem Hohlrad (9) in Eingriff steht und wobei das flexible Zahnrad (6) mindestens zwei Zahnsegmente (7.1, 7.2) umfasst, die mittels Federsegmenten (8) miteinander verbunden sind, mindestens eines der Zahnsegmente (7.1) eine Ausnehmung (17) aufweist, jedes der Federsegmente (8) eine Mittelebene (M_{FS}) aufweist, die eine zentrale Mittelachse (M) des Getriebes (1) beinhaltet und das jeweilige Federsegment (8) in zwei Bereiche gleicher Länge unterteilt und jede Ausnehmung (17) eine Mittelebene (M_{A}) aufweist, die die zentrale Mittelachse (M) des Getriebes (1) beinhaltet und die Ausnehmung (17) in zwei gleich große Bereiche unterteilt und die Mittelebene (M_{FS}) jedes Federsegments (8) einen unterschiedlichen Abstand zu der auf jeder Seite der Mittelebene (M_{FS}) des Federsegments (8) daneben liegenden Mittelebene (M_{A}) der Ausnehmung (17) aufweist, **dadurch gekennzeichnet, dass** in der Ausnehmung des mindestens einen Zahnsegments (7.1) ein Zapfenelement (11) angeordnet ist.

2. Getriebe (1) nach Anspruch 1, **dadurch gekennzeichnet, dass** mindestens eines der Zahnsegmente (7.1, 7.2) in radialer Richtung des flexiblen Zahnrads (6) eine Taillierung (24) aufweist und die Federsegmente (8) im Bereich der Taillierung (24) an dieses Zahnsegment (7.2) angreifen.

3. Getriebe (1) nach Anspruch 1 oder 2, **dadurch gekennzeichnet, dass** die Federsegmente (8) als bogenförmige Stege ausgebildet sind, die sich auf einer Kreislinie in Umfangsrichtung des flexiblen Zahnrads (6) erstrecken, so dass sie Elastizität in radialer Richtung aufweisen und in Tangentialrichtung steif sind.

4. Getriebe (1) nach einem der Ansprüche 1 bis 3, **dadurch gekennzeichnet, dass** die Federsegmente (8) einstückig mit den Zahnsegmenten (7.1, 7.2) ausgebildet sind.

5. Getriebe (1) nach einem der Ansprüche 1 bis 4, **dadurch gekennzeichnet, dass** die Federsegmente (8) als Stege ausgebildet sind, die benachbarte Zahnsegmente (7.1, 7.2) miteinander verbinden.

6. Getriebe (1) nach mindestens einem der vorhergehenden Ansprüche, **dadurch gekennzeichnet, dass** das flexible Zahnrad (6) mindestens ein erstes Zahnsegment (7.1) aufweist, das mit einer Ausnehmung (17) versehen ist, und mindestens ein zweites Zahnsegment (7.2), dass keine Ausnehmung aufweist.

7. Getriebe (1) nach Anspruch 6, **dadurch gekennzeichnet, dass** die Federsegmente (8) auf Höhe der Ausnehmungen (17) in dem mindestens einen ersten Zahnsegment (7.1) an das mindestens eine erste Zahnsegment (7.1) angreifen.

8. Getriebe (1) nach Anspruch 6 oder 7, **dadurch gekennzeichnet, dass** die Federsegmente (8) in dem Bereich, in dem sie mit dem mindestens einen ersten Zahnsegment (7.1) in Kontakt stehen, einen Freistich (25) aufweisen.

9. Getriebe (1) nach mindestens einem der vorhergehenden Ansprüche, **dadurch gekennzeichnet, dass** eine Mehrzahl von Zahnsegmenten (7.1, 7.2), insbesondere mindestens vier Zahnsegmente (7.1, 7.2), vorgesehen sind.

10. Getriebe (1) nach Anspruch 9, **dadurch gekennzeichnet, dass** die Hälfte der Zahnsegmente (7.1) eine Ausnehmung (17) aufweist.

11. Getriebe (1) nach mindestens einem der vorhergehenden Ansprüche, **dadurch gekennzeichnet, dass** die Ausnehmung (17) in den ersten Zahnsegmenten (7.1) im Inneren des jeweiligen Zahnsegments (7.1) angeordnet ist.

12. Getriebe (1) nach mindestens einem der vorhergehenden Ansprüche, **dadurch gekennzeichnet, dass** sich jedes Zahnsegment (7.1, 7.2) an zwei Auflagepunkten auf dem Wavegenerator (2) abstützt.

13. Getriebe (1) nach mindestens einem der vorhergehenden Ansprüche, **dadurch gekennzeichnet, dass** der Wavegenerator (2) mindestens einen Nocken aufweist, der mit dem flexiblen Zahnrad (6) in Kontakt steht, und der Nocken derart ausgebildet ist, dass die Zahnsegmente (7.1, 7.2) in dem Bereich, in dem sie mit dem Hohlrad (9) in Eingriff stehen, derart verformt werden, dass sie einen Abschnitt eines imaginären Zahnrades mit einem konstanten Radius (R) bilden, das sich um eine Achse (Ms) dreht, die einen festgelegten Abstand (e) zur zentralen Mittelachse (M) des Getriebes aufweist.

14. Getriebe (1) nach mindestens einem der vorhergehenden Ansprüche, **dadurch gekennzeichnet, dass** die Zapfenelemente als Bolzen (12) ausgebildet sind, die mit einer Abtriebswelle verbunden sind.

15. Getriebe (1) nach Anspruch 14, **dadurch gekennzeichnet, dass** auf jedem Bolzen (12) eine Hülse (13) angeordnet ist.

## Claims

1. Transmission (1) comprising a ring gear (9) within which a flexible gearwheel (6) is arranged, wherein a flexible gearwheel (6) is connected to a wave generator (2) and the wave generator (2) deforms the flexible gearwheel (6) so that it meshes partially with the ring gear (9), and wherein the flexible gearwheel (6) comprises at least two toothed segments (7.1, 7.2) which are connected to each other by means of spring segments (8), at least one of the toothed segments (7.1) features a recess (17), each of the spring segments (8) features a median plane (M_{FS}) that includes a central median axis (M) of the transmission (1) and divides the respective spring segment (8) into two areas of equal length, and each recess (17) features a median plane (M_{A}) that comprises the central median axis (M) of the transmission (1) and divides the recess (17) in two areas of equal size, and the median plane (M_{FS}) of each spring segment (8) shows a different distance to the median plane (M_{A}) of the recess (17) adjacent to each side of the median plane (M_{FS}) of the spring segment (8), **characterized in that** a gudgeon element (11) is arranged in the recess of the at least one toothed segment (7.1).

2. Transmission (1) of claim 1, **characterized in that** at least one of the toothed segments (7.1, 7.2) features a constriction (24) in radial direction of the flexible gearwheel (6) and the spring segments (8) mesh with this toothed segment (7.2) in the area of the constriction (24).

3. Transmission (1) according to claim 1 or 2, **characterized in that** the spring segments (8) are constituted as arched crosspieces that extend along a circle in circumferential direction of the flexible gearwheel (6), so that they are elastic in radial direction and stiff in tangential direction.

4. Transmission (1) of one of claims 1 to 3, **characterized in that** the spring segments (8) are constituted integrally with the toothed segments (7.1, 7.2).

5. Transmission (1) of one of claims 1 to 4, **characterized in that** the spring segments (8) are constituted as crosspieces that connect neighboring toothed segments (7.1, 7.2) with each other.

6. Transmission (1) of at least one of the previous claims, **characterized in that** the flexible gearwheel (6) features at least one first toothed segment (7.1) that includes a recess (17), and at least one second toothed segment (7.2) that does is not include a recess.

7. Transmission (1) of claim 6, **characterized in that** the spring segments (8) engage with the at least one first toothed segment (7.1) at the height of the recesses (17) in said at least one first toothed segment (7.1).

8. Transmission (1) according to claim 6 or 7, **characterized in that** the spring segments (8) feature an undercut (25) in the area where they are in contact with the at least one first toothed segment (7.1).

9. Transmission (1) of at least one of the previous claims, **characterized in that** a plurality of toothed segments (7.1, 7.2) are provided, in particular at least four toothed segments (7.1, 7.2).

10. Transmission (1) of claim 9, **characterized in that** half of the toothed segments (7.1) comprise a recess (17).

11. Transmission (1) of at least one of the previous claims, **characterized in that** the recess (17) in the first toothed segments (7.1) is arranged inside the respective toothed segment (7.1).

12. Transmission (1) of at least one of the previous claims, **characterized in that** each toothed segment (7.1, 7.2) is supported by two bearing points on the wave generator (2).

13. Transmission (1) of at least one of the previous claims, **characterized in that** the wave generator (2) comprises at least one cam that is in contact with the flexible gearwheel (6), and the cam is formed so that the toothed segments (7.1, 7.2), in the area where they are meshed with the ring gear (9), are deformed in such a way that they constitute a section of a constant radius (R) imaginary gearwheel that rotates about an axis (Ms), which is spaced at a determined distance (e) to the central median axis (M) of the transmission.

14. Transmission (1) of at least one of the previous claims, **characterized in that** the gudgeon elements are constituted as pins (12) that are connected with an output shaft.

15. Transmission (1) of claim 14, **characterized in that** a bushing (13) is arranged on each of the pins (12).

## Revendications

1. Transmission (1) comportant une couronne (9) où est agencé un engrenage flexible (6), dans laquelle l'engrenage flexible (6) est connecté à un générateur d'onde (2), et le générateur d'onde (2) déforme l'engrenage flexible (6) de manière s'engrener partiellement avec la couronne (9), et dans laquelle l'engrenage flexible (6) comporte au moins deux segments de denture (7.1, 7.2) qui sont connectés entre eux par de segments de ressort (8), au moins l'un des segments de denture (7.1) comporte un évidement (17), chacun des segments de ressort (8) comporte un plan médian (M_{FS}) qui comprend un axe médian central (M) de la transmission (1) et divise le segment de ressort respectif (8) en deux parties de même longueur, et chaque évidement (17) comporte un plan médian (M_{A}) qui comprend l'axe médian central (M) de la transmission (1) et divise l'évidement (17) en deux parties de même grandeur, et le plan médian (M_{FS}) de chaque segment de ressort (8) présente une distance différente jusqu'au plan médian (M_{A}) de l'évidement (17) adjacent de chaque côté du plan médian (M_{FS}) du segment de ressort (8), **caractérisée en ce qu'**un élément de goujon (11) est agencé dans l'évidement dudit au moins un segment de denture (7.1).

2. Transmission (1) selon la revendication 1, **caractérisée en ce qu'**au mois l'un des segments de denture (7.1, 7.2) comporte un rétrécissement (24) en direction radiale de l'engrenage flexible (6) et les segments de ressort (8) s'engagent avec ce segment de denture (7.2) dans la partie du rétrécissement (24).

3. Transmission (1) selon la revendication 1 ou 2, **caractérisée en ce que** les segments de ressort (8) sont constitués comme des traverses arquées qui s'étendent sur un cercle en direction circonférentielle de l'engrenage flexible (6), de manière à ce qu'ils soient élastiques en direction radiale et rigides en direction tangentielle.

4. Transmission (1) selon l'une des revendications 1 à 3, **caractérisée en ce que** les segments de ressort (8) sont constitués d'une seule pièce avec les segments de denture (7.1, 7.2).

5. Transmission (1) selon l'une des revendications 1 à 4, **caractérisée en ce que** les segments de ressort (8) sont constitués comme des traverses qui connectent entre eux des segments de denture voisins (7.1, 7.2).

6. Transmission (1) selon au moins l'une des revendications précédentes, **caractérisée en ce que** l'engrenage flexible (6) comporte au moins un premier segment de denture (7.1) pourvu d'un évidement (17), et comporte au moins un deuxième segment de denture (7.2) sans évidement.

7. Transmission (1) selon la revendication 6, **caractérisée en ce que** les segments de ressort (8) s'engagent dans ledit au moins un premier segment de denture (7.1) sur ledit au moins un premier segment de denture (7.1) à hauteur des évidements (17).

8. Transmission (1) selon la revendication 6 ou 7, **caractérisée en ce que** les segments de ressort (8) présentent un dégagement (25) dans la partie où ils sont en contact avec ledit au moins un premier segment de denture (7.1) .

9. Transmission (1) selon au moins l'une des revendications précédentes, **caractérisée en ce qu'**une pluralité de segments de denture (7.1, 7.2), en particulier au moins quatre segments de denture (7.1, 7.2), sont pourvus.

10. Transmission (1) selon la revendication 9, **caractérisée en ce que** la moitié des segments de denture (7.1) comportent un évidement (17).

11. Transmission (1) selon au moins l'une des revendications précédentes, **caractérisée en ce que** l'évidement (17) est agencé dans les premiers segments de denture (7.1) à l'intérieur du segment de denture respectif (7.1) .

12. Transmission (1) selon au moins l'une des revendications précédentes, **caractérisée en ce que** chaque segment de denture (7.1, 7.2) est soutenu par deux points de support sur le générateur d'onde (2).

13. Transmission (1) selon au moins l'une des revendications précédentes, **caractérisée en ce que** le générateur d'onde (2) comporte au moins une came qui est en contact avec l'engrenage flexible (6), et **en ce que** la came est constituée de telle sorte que les segments de denture (7.1, 7.2) sont déformés dans la partie où ils sont engrenés avec la couronne (9), de telle sorte qu'ils constituent une section d'un engrenage imaginaire à rayon constant (R) tournant autour d'un axe (Ms) qui présente une distance déterminée (e) par rapport à l'axe médian central (M) de la transmission.

14. Transmission (1) selon au moins l'une des revendications précédentes, **caractérisée en ce que** les éléments de goujon (12) sont constitués comme des boulons qui sont connectés à un arbre entraîné.

15. Transmission (1) selon la revendication 14, **caractérisée en ce qu'**une douille (13) est agencée sur chaque boulon (12).
